# EUROPÄISCHE PATENTANMELDUNG

(11) **EP 4 614 339 A1**
(43) Veröffentlichungstag der Anmeldung: **10.09.2025**
(21) Anmeldenummer: 25161394.9
(22) Anmeldetag: 03.03.2025
(51) Int. Cl.: G06F 16/185, G07C 5/00, G08G 1/01

(54) **VERFAHREN ZUM DATENMANAGEMENT VON BETRIEBSDATEN IN EINEM DATENVORRAT, COMPUTERPROGRAMMPRODUKT SOWIE SYSTEM**

(30) Priorität: 04.03.2024 DE 102024106170
(71) Anmelder: VOLKSWAGEN AG, 38440 Wolfsburg (DE)
(72) Erfinder: Fricke, Jenny, 38118 Braunschweig (DE); Pfadler, Andreas, 13357 Berlin (DE)
(74) Vertreter: Bals & Vogel Patentanwälte PartGmbB

(57) **Zusammenfassung**

Die Erfindung betrifft ein Verfahren (100) zum Datenmanagement von Betriebsdaten (200) mehrerer mobiler Vorrichtungen (1), umfassend: Erhalt (102) der Betriebsdaten (200) der Vorrichtungen (1) mit Metadaten (201) zu den Betriebsdaten (200), Erfassen (103) von zumindest einer Metaeigenschaft (201.1) der Betriebsdaten (200) anhand der Metadaten (201), Erfassen (104) zumindest eines zeitabhängigen Verwerfungskriteriums (202) zur Zuordnung zu der Metaeigenschaft (201.1). Ferner betrifft die Erfindung ein Computerprogrammprodukt sowie ein System (3).

## Beschreibung

Die Erfindung betrifft ein Verfahren zum Datenmanagement von Betriebsdaten mehrerer mobiler Vorrichtungen, ein Computerprogrammprodukt sowie ein System.

Es ist bekannt, während des Betriebs von Vorrichtungen, insbesondere mit einer Sensorik und/oder einer Elektronik, Daten zu erheben. Beispielsweise kann es vorgesehen sein, dass durch autonom fahrende Fahrzeuge Daten erhoben werden sollen, um behördliche und betriebliche Dokumentationen über die autonome Fahrweise sowie die damit verbundenen Fahrsituationen zu schaffen. Beispielsweise kann gefordert werden, Daten zu bestimmten Ereignissen, wie Unfällen, Vollbremsungen und dergleichen, aufzuzeichnen und vorzuhalten. Auch können derartige Daten für die Verbesserung von Funktionen der Fahrzeuge von Interesse sein.

Bei der Datenerhebung können jedoch große Datenmengen anfallen, die mangels Rechenkapazität im Fahrzeug z. B. in einer Cloud gespeichert und verarbeitet werden. Beispielsweise ist es aus dem Dokument DE 11 2021 001 385 T5 bekannt, Daten von Ereignissen beim Betreiben eines Fahrzeugs zu sammeln.

Eine Verarbeitung von Daten von Fahrzeugen in einer Cloud ist beispielsweise aus dem Dokument WO 2020/097221 A1 bekannt. Werden die Daten von vielen Fahrzeugen einer größeren Fahrzeugflotte in die Cloud geladen, können sich die Daten schnell zu einer großen Datenmenge ansammeln. Da eine Speicherung großer Datenmengen jedoch zu hohen Kosten führen kann, ist es wünschenswert, die vorhandene Datenmenge zu minimieren. Allerdings können für die Daten je nach Inhalt unterschiedliche Aufbewahrungszeiten erforderlich sein.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Datenmenge von Betriebsdaten mehrerer Vorrichtungen, unter Berücksichtigung unterschiedlicher Anforderungen an eine Aufbewahrung der Betriebsdaten, in einem Datenvorrat zu verwalten und/oder zu reduzieren.

Die voranstehende Aufgabe wird gelöst durch ein Verfahren mit den Merkmalen des Anspruchs 1, ein Computerprogrammprodukt mit den Merkmalen des Anspruchs 9, sowie ein System mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen System und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Datenmanagement von Betriebsdaten mehrerer mobiler Vorrichtungen vorgesehen. Das Verfahren umfasst, insbesondere in Form von Verfahrensschritten:
- Erhalt der Betriebsdaten der Vorrichtungen mit Metadaten zu den Betriebsdaten, insbesondere durch ein Kontrollsystem,
- Erfassen von zumindest einer Metaeigenschaft der Betriebsdaten anhand der Metadaten, insbesondere durch das Kontrollsystem,
- Erfassen zumindest eines zeitabhängigen Verwerfungskriteriums zur Zuordnung zu der Metaeigenschaft, insbesondere durch das Kontrollsystem,
- Hinzufügen der erhaltenen Betriebsdaten zu einem Datenvorrat, insbesondere durch das Kontrollsystem,
- Wiederholtes Durchführen eines Überprüfungsvorgangs zum Erkennen einer Verwerfbarkeit der im Datenvorrat enthaltenen Betriebsdaten in Abhängigkeit von der Metaeigenschaft und dem Verwerfungskriterium, insbesondere durch das Kontrollsystem,
- Entfernen einer Teilmenge des Datenvorrats aus dem Datenvorrat in Abhängigkeit von dem Erkennen der Verwerfbarkeit, insbesondere durch das Kontrollsystem.

Unter den mobilen Vorrichtungen können insbesondere bewegliche Vorrichtungen verstanden werden, insbesondere welche die Betriebsdaten beim Bewegen der jeweiligen Vorrichtung und/oder an unterschiedlichen Orten erheben können.

Der Erhalt der Betriebsdaten erfolgt vorzugsweise unmittelbar von den Vorrichtungen und/oder mittelbar, indem die Betriebsdaten von einer dezentralen Sammelstelle zur dezentralen Sammlung der Betriebsdaten empfangen werden. Insbesondere kann der Erhalt der Betriebsdaten über eine kabelgebundene Verbindung und/oder eine Funkverbindung, z. B. über ein Mobilfunknetz, erfolgen. Die Sammelstelle kann insbesondere eine, vorzugsweise lokale, Basisstation und/oder einen dezentralen Knotenpunkt darstellen, an welchem die Betriebsdaten der Vorrichtungen abgespeichert werden können. Weiterhin kann die Sammelstelle eine Ladestation zum Laden der Vorrichtungen mit elektrischer Energie umfassen. Ferner kann die Sammelstelle beispielsweise eine Basis für eine Flotte von mehreren Fahrzeugen bilden. Durch die Sammelstelle kann verhindert werden, dass sich die Vorrichtungen ständig mit dem Server verbinden und/oder dass eine Übertragung der Betriebsdaten durch einen Verbindungsabbruch mit dem Server unterbrochen wird. Ferner kann die Sammelstelle die Betriebsdaten dezentral filtern, um Serverkapazitäten zu reduzieren. Es kann vorgesehen sein, dass das Ausführen des Sammelns der Betriebsdaten durch die Vorrichtungen Teil des Verfahrens ist. Vorzugsweise wird das Verfahren, insbesondere vollständig, serverseitig ausgeführt und durch die Vorrichtungen mit Betriebsdaten gespeist.

Unter dem zeitabhängigen Verwerfungskriterium kann beispielsweise eine Verwahrzeit und/oder eine Funktion zur Ermittlung der Verwahrzeit in Abhängigkeit von der Metaeigenschaft verstanden werden. Die Metadaten können Tags und/oder Textinformationen zu den Betriebsdaten umfassen. Insbesondere können die Metadaten ein vordefiniertes Auslösekriterium umfassen, anhand dessen die Betriebsdaten durch die Vorrichtungen gespeichert und/oder für das Kontrollsystem bereitgestellt werden. Das vordefinierte Auslösekriterium kann beispielsweise eine vordefinierte Fahrsituation sein. Unter einer vordefinierten Fahrsituation wird im Rahmen der Erfindung eine Kombination aus Fahrzeugparametern, wie beispielsweise Betriebsparametern des Fahrzeuges und/oder Umgebungsparametern des Fahrzeuges verstanden. Betriebsparameter des Fahrzeuges können beispielsweise Geschwindigkeit, Beschleunigung, Lenkwinkel, Fahrtrichtung, Motordrehzahl, Kühlmitteltemperatur, Bremsmoment, Bremsentemperatur, Radschlupf, Gieren, Rollen, Nicken oder dergleichen sein. Umgebungsparameter können beispielsweise eine Fahrbahnbreite, Fahrbahnrichtung, Fahrbahnbeschaffenheit, Fahrbahnneigung, Wetter, Niederschlag, Verkehrsteilnehmer, Hindernisse, Außentemperatur oder dergleichen umfassen. Eine Fahrsituation kann beispielsweise durch einen auf die Fahrbahn rollenden Ball in Kombination mit einer vorgegebenen Mindestfahrzeuggeschwindigkeit sowie einer Fahrzeugrichtung auf Kollisionskurs vordefiniert sein.

Die Metaeigenschaft kann z. B. das Auslösekriterium oder eine mit dem Auslösekriterium verknüpfte Information umfassen. Vorzugsweise kann die Metaeigenschaft einen Zweck der Speicherung der Betriebsdaten und/oder des Auslösekriteriums umfassen. Beispielsweise kann die Metaeigenschaft für die der Metaeigenschaft jeweils zugeordneten Betriebsdaten eine rechtliche und/oder gewährleistungsbezogene Anforderung zur Speicherung der Betriebsdaten aus Nachweisgründen, eine Entwicklungsanforderung zur Speicherung der Betriebsdaten für Weiterentwicklungen, eine Monetarisierungsanforderung zur Speicherung der Daten zur Extraktion verkaufbarer Informationen und/oder eine sonstige Anforderung ausweisen. Dabei kann das zeitabhängige Verwerfungskriterium zu der, insbesondere jeweiligen, Metaeigenschaft korrespondieren, d. h. vorzugsweise zu der Metaeigenschaft zugeordnet werden oder sein.

Insbesondere können mehrere unterschiedliche Metaeigenschaften der Betriebsdaten erfasst werden, insbesondere wobei jeder der unterschiedlichen Metaeigenschaften ein individuelles Verwerfungskriterium zugeordnet wird. Beispielsweise kann einer Metaeigenschaft in Form einer rechtlichen Anforderung und/oder eines rechtlichen Zweckes ein vorbestimmter Aufbewahrungszeitraum zugeordnet werden.

Die Betriebsdaten können vorzugsweise Sensordaten der Vorrichtung, Zustandsdaten der Vorrichtung und/oder Steuerungsparameter der Vorrichtung umfassen. Die Sensordaten können rohe und/oder aufbereitete Messdaten umfassen. Die Steuerungsparameter können Steuer- und/oder Regelsignale zum Bewegen der Vorrichtung umfassen. Beispielsweise können die Steuerungsparameter Betriebsdaten eines selbstfahrenden Systems eines Fahrzeuges sein. Insbesondere können die Steuerungsparameter zum Ausführen einer sicherheitsrelevanten Funktion der Vorrichtung dienen. Die Zustandsdaten können beispielsweise eine Geschwindigkeit, eine Beschleunigung, einen Fahrzustand und/oder einen Wartungszustand der Vorrichtung umfassen. Weiterhin ist es denkbar, dass die Betriebsdaten statische Informationen, wie z. B. eine Fahrzeugidentifikationsnummer, umfassen.

Das Kontrollsystem kann einen Prozessor und/oder einen Mikroprozessor umfassen. Ferner kann das Kontrollsystem zumindest teilweise oder vollständig in ein Steuergerät einer dezentralen Sammelstelle und/oder in einen Server integriert sein. Es ist jedoch ebenfalls denkbar, dass das Kontrollsystem zumindest teilweise oder vollständig in ein oder mehrere Recheneinheiten integriert ist. Insbesondere kann die Sammelstelle dazu ausgestaltet sein, die gesammelten Betriebsdaten der Vorrichtungen vorzugsweise gebündelt an einen Server weiterzuleiten. Der Server kann vorteilhafterweise Teil einer Cloudinfrastruktur sein.

Der Datenvorrat kann historische und aktuelle Betriebsdaten der Vorrichtungen umfassen. Beim Hinzufügen der erhaltenen Betriebsdaten zu dem Datenvorrat können die erhaltenen Betriebsdaten in einem Speicher abgespeichert werden, der dem Datenvorrat zugeordnet ist. Insbesondere kann der Datenvorrat durch das Hinzufügen der erhaltenen Betriebsdaten vergrößert werden. Der Datenvorrat kann vollständig in eine Speichereinheit integriert oder auf mehrere Speichereinheiten aufgeteilt sein.

Der Überprüfungsvorgang kann vorzugsweise auf vordefinierten Regeln und/oder Baumstrukturen basieren. Weiterhin ist es denkbar, dass das Kontrollsystem ein künstliches, neuronales Netzwerk zum Durchführen des Überprüfungsvorgangs aufweist. Vorzugsweise kann der Überprüfungsvorgang nach regelmäßigen oder unregelmäßigen Intervallen wiederholt werden. Beispielsweise kann die Wiederholung automatisch nach einer vordefinierten Zeitspanne und/oder einem Erreichen einer vordefinierten Datenmenge im Datenvorrat erfolgen. Es kann vorgesehen sein, dass nach und/oder bei jeder Wiederholung des Überprüfungsvorgangs das Entfernen einer Teilmenge des Datenvorrats erfolgt. Unter der Teilmenge des Datenvorrats wird insbesondere eine Teilmenge aller im Datenvorrat gespeicherten Betriebsdaten und/oder eine Teilmenge von Datensegmenten der im Datenvorrat gespeicherten Betriebsdaten verstanden. Beim Erkennen der Verwerfbarkeit kann die Teilmenge als verwerfbar erkannt werden. Beispielsweise kann erkannt werden, dass die Speicherung der Teilmenge im Datenvorrat nicht weiter benötigt und/oder gewünscht ist. Es kann vorgesehen sein, dass das Entfernen der Teilmenge unmittelbar mit dem Überprüfungsvorgang erfolgt, sodass alle als verwerfbar erkannten Betriebsdaten unmittelbar aus dem Datenvorrat entfernt werden. Alternativ kann vorgesehen sein, dass die Verwerfbarkeit zunächst gekennzeichnet wird und das Entfernen anschließend für die gesamte Teilmenge erfolgt. Beim Entfernen der Teilmenge kann die Teilmenge aus dem Datenvorrat gelöscht oder in einen anderen Datenspeicher verschoben werden.

Es ist somit im Rahmen der vorliegenden Erfindung erkannt worden, dass die im Datenvorrat gespeicherten Betriebsdaten über eine Zeit an Relevanz verlieren können. Dabei kann die Teilmenge aufgrund der Berücksichtigung der Metaeigenschaft auch aus einer großen Datenmenge im Datenvorrat in effizienter Art und Weise extrahiert werden, sodass eine andere Teilmenge im Datenvorrat verbleibt. Dadurch können daher unterschiedliche Anforderungen an eine Aufbewahrung der Betriebsdaten erfüllt werden. Durch den sich wiederholenden Überprüfungsvorgang und das Entfernen der Teilmenge aus dem Datenvorrat können Kosten für das Hosting der Daten sowie administrative Kosten zur Weiterverarbeitung und/oder Verwaltung des Datenvorrats reduziert werden. Auch kann die Datensicherheit durch das Verfahren erhöht werden, da selbst bei einem etwaigen, unberechtigten Zugriff nur eine begrenzte Menge an Daten überhaupt zur Verfügung steht.

Vorzugsweise kann bei einem erfindungsgemäßen Verfahren vorgesehen sein, dass das Verwerfungskriterium eine Mindestvorhaltezeit zur Definition einer Zeitspanne zur Bereitstellung der Betriebsdaten im Datenvorrat umfasst. Unter der Zeitspanne zur Bereitstellung der Betriebsdaten im Datenvorrat kann eine Vorgabe für eine Mindestspeicherzeit verstanden werden, in welcher die jeweiligen Betriebsdaten im Datenvorrat zur Verfügung stehen sollen. Die Mindestvorhaltezeit kann beispielsweise mehrere Monate, z. B. zwei Monate, oder mehrere Jahre, z. B. 3 Jahre, sein. Vorzugsweise ist die Mindestvorhaltezeit für jede Metaeigenschaft vordefiniert oder kann aus der Metaeigenschaft und/oder weiteren Bedingungen abgeleitet werden. Die Verwerfbarkeit kann beim Überprüfungsvorgang insbesondere beim oder nach Ablauf der Mindestvorhaltezeit erkannt werden. Dadurch kann sichergestellt werden, dass die Betriebsdaten für die Mindestvorhaltezeit im Datenvorrat zur Verfügung stehen. Gleichzeitig kann die Mindestvorhaltezeit als Indikator genutzt werden, um die Verwerfbarkeit zu erkennen.

Beispielsweise können Betriebsdaten, die einen Zu- und Ausstieg von Passagieren belegen, nach Ablauf einer rechtlichen Frist entfernt werden.

Weiterhin kann bei einem erfindungsgemäßen Verfahren vorteilhafterweise vorgesehen sein, dass die Betriebsdaten Sensordaten in Form von Umgebungsdaten der mobilen Vorrichtungen umfassen und/oder es sich bei den mobilen Vorrichtungen um Fahrzeuge zum Ausführen einer autonomen Fahrfunktion handelt. Die Umgebungsdaten können insbesondere Bilddaten, insbesondere in Form von Daten einer Kamera, und/oder Daten eines Lidar- und/oder eines Radar-Systems der Vorrichtung umfassen. Diese können hohe Datenmengen umfassen, insbesondere, wenn diese beim Betreiben von Fahrzeugen anfallen. Bei den Fahrzeugen kann es sich vorzugsweise um Kraftfahrzeuge, beispielsweise in Form von Elektrofahrzeugen, handeln. Ferner können die Fahrzeuge zum vollständig autonomen Fahren, insbesondere mit einem Automatisierungslevel 4 oder 5, ausgebildet sein. Weiterhin können die Fahrzeuge in einer Flotte zur Ausführung eines Dienstes, z. B. eines sog. Mobility-as-a-Service (MaaS) und/oder Transport-as-a-Service (TaaS) betrieben werden. Die Flotte kann beispielsweise 250 bis 300 Fahrzeuge umfassen. Die Fahrzeuge können zu einem festen Zeitpunkt, z. B. abends, zu einer Sammelstelle zurückkehren, um zu laden und die Betriebsdaten vom Fahrzeug für das Kontrollsystem bereitzustellen. Gerade beim Betrieb von automatisierten Fahrzeugen können große Datenmengen entstehen, deren Speicherung und Verarbeitung hohe Kosten bedingen können. Durch das Verfahren kann das Verwalten der Betriebsdaten innerhalb des Kontrollsystems auch bei einer Vielzahl von Fahrzeugen effizient erfolgen.

Weiterhin kann bei einem erfindungsgemäßen Verfahren vorteilhafterweise vorgesehen sein, dass der Überprüfungsvorgang durch ein wissensbasiertes Verarbeitungssystem ausgeführt wird, welches ein künstliches, neuronales Netz, vorzugsweise in Form eines Logic Tensor Networks, umfasst, insbesondere wobei bei dem Überprüfungsvorgang zumindest die Teilmenge der Betriebsdaten, die Metaeigenschaft und das Verwerfungskriterium Eingangsdaten für das Erkennen der Verwerfbarkeit durch das wissensbasierte Verarbeitungssystem bilden. Die Erkennung der Verwerfbarkeit, z. B. in Form einer Zuordnung einer Verwerfbarkeitsinformation zu den Betriebsdaten, kann somit die Ausgangsdaten bilden. Das wissensbasierte Verarbeitungssystem kann eine Wissensbasis mit Regeln und/oder exemplarischen Betriebsdaten umfassen. Unter einem Logic Tensor Network, insbesondere auch logisches Tensor-Netzwerk genannt, kann eine, insbesondere mehrschichtige, Struktur einer künstlichen Intelligenz verstanden werden, die auf Tensoroperationen und logischen Ausdrücken basiert, um komplexe Entscheidungsprozesse zu modellieren. Dadurch kann eine Leistungsfähigkeit von Tensoren, die in der Lage sind, mehrdimensionale Betriebsdaten zu verarbeiten, mit logischen Operationen kombiniert werden, um komplexe Beziehungen zwischen den Betriebsdaten und/oder den Metadaten, insbesondere auf Basis der Wissensbasis, zu modellieren. Die Trainingsdaten für das neuronale Netz können Beispiele umfassen, die sowohl Eingabedaten als auch die entsprechenden richtigen Ausgaben enthalten. Nach dem Training kann das System die Eingangsdaten verarbeiten und mithilfe des logischen Tensor-Netzwerks Schlussfolgerungen ziehen oder Entscheidungen treffen. Das Netzwerk kann komplexe Muster in den Eingabedaten erkennen und logische Ausdrücke verwenden, um basierend auf dem vorhandenen Wissen und den gelernten Mustern Entscheidungen zu treffen. Das wissensbasierte System kann sein Wissen und/oder seine Leistung durch manuelle und/oder automatisierte Rückmeldungen verbessern. Die Rückmeldungen können Regeln und/oder Teilregeln umfassen.

Vorzugsweise kann bei einem erfindungsgemäßen Verfahren vorgesehen sein, dass beim Überprüfungsvorgang eine nach dem Hinzufügen zum Datenvorrat erfolgte Verwendung der Betriebsdaten im Datenvorrat erkannt und zum Erkennen der Verwerfbarkeit berücksichtigt wird. Die Verwendung ist somit insbesondere eine nachträgliche Verwendung auf dem Server. Es kann vorgesehen sein, dass den Betriebsdaten, insbesondere den Metadaten der Betriebsdaten, eine Verwendungsinformation beim Erhalt und/oder beim Hinzufügen zu dem Datenvorrat, vorzugsweise zusätzlich zur Metaeigenschaft, hinzugefügt wird. Dabei kann die Verwendungsinformation eine boolesche Information sein, welche Aufschluss darüber gibt, ob die Betriebsdaten durch das Kontrollsystem verwendet wurden. Beispielsweise kann die Verwendungsinformation beim Erhalt und/oder beim Hinzufügen zu dem Datenvorrat eine negative Verwendung kennzeichnen und beim Abrufen und/oder Öffnen der Betriebsdaten im Datenvorrat als positive Verwendung gekennzeichnet werden. Die Verwendung kann einen Indikator für eine Relevanz der Betriebsdaten darstellen. Insbesondere können Betriebsdaten, die bereits verwendet wurden, als relevanter betrachtet werden. Beispielsweise kann die Mindestvorhaltezeit für Betriebsdaten mit der erfolgten Verwendung verlängert oder neu gestartet werden. Es ist denkbar, dass die Verwendungsinformation als Nachricht, insbesondere an einen Benutzer, ausgegeben wird. Beispielsweise kann der Benutzer über die Verwendungsinformation für eine manuelle Überprüfung und/oder erneute Überprüfung informiert werden.

Weiterhin ist es bei einem erfindungsgemäßen Verfahren denkbar, dass das Verfahren umfasst:
- Senden von Steuerungsinstruktionen an die Vorrichtungen zum Bereitstellen der Betriebsdaten mit der Metaeigenschaft, insbesondere durch das Kontrollsystem,
vorzugsweise wobei der Erhalt der gesammelten Betriebsdaten und/oder das Erfassen der Metaeigenschaft in Abhängigkeit von den Steuerungsinstruktionen erfolgt. Zum Definieren der Steuerungsinstruktionen kann beispielsweise das Auslösekriterium für die Vorrichtungen zur Speicherung und/oder Übertragung der Betriebsdaten festgelegt werden. Die Steuerungsinstruktionen können insbesondere das Auslösekriterium und/oder die Metaeigenschaft umfassen. Beispielsweise kann den Vorrichtungen über die Steuerungsinstruktionen mitgeteilt werden, dass alle Unfälle mit anderen Verkehrsteilnehmern für rechtliche Anforderungen an das Kontrollsystem übertragen werden sollen. Somit kann ein Datenstrom zum Server durch die Steuerungsinstruktionen begrenzt werden. Ferner ermöglichen die Steuerungsinstruktionen bestimmte Betriebsdaten zu erfassen, um diese weiterverarbeiten zu können und/oder Erkenntnisse daraus zu gewinnen.

Es ist ferner bei einem erfindungsgemäßen Verfahren denkbar, dass zum Entfernen der Teilmenge aus dem Datenvorrat Schlüsseldaten in Abhängigkeit von der Metaeigenschaft aus der Teilmenge extrahiert werden, wobei die Schlüsseldaten beim Entfernen der Teilmenge im Datenvorrat verbleiben. Dadurch kann eine Teilentfernung, insbesondere eine Teillöschung, bestimmter Betriebsdaten erfolgen. Bei der Extraktion der Schlüsseldaten aus der Teilmenge können die Schlüsseldaten generiert und/oder abgesondert werden. Beispielsweise können die Schlüsseldaten eine Dokumentation der Betriebsdaten umfassen. Ferner können die Schlüsseldaten beispielsweise Ausschnitte aus Betriebssituationen, z. B. in Form von Unfalldaten, der Vorrichtungen abbilden. Dadurch können relevante Informationen in den Schlüsseldaten erhalten bleiben, wenn die Datenmenge im Datenvorrat reduziert wird.

Ferner kann bei einem erfindungsgemäßen Verfahren vorteilhafterweise vorgesehen sein, dass ein Nebenspeicher vorgesehen ist, in welchen die Teilmenge beim Entfernen aus dem Datenvorrat verschoben wird, wobei die Teilmenge aus dem Nebenspeicher in Abhängigkeit von einem Nachprüfungsvorgang in Abhängigkeit von der Metaeigenschaft und einem Nachprüfungskriterium entfernt wird. Das Nachprüfungskriterium kann ein zeitabhängiges Kriterium, z. B. in Form einer Mindestverwahrzeit im Nebenspeicher, sein. Bei dem Nebenspeicher kann es sich um einen Speicherbereich handeln, welcher separat zu dem Datenvorrat ausgebildet ist. Beispielsweise kann der Nebenspeicher einen Speicher in Form eines hot storage, cold storage oder glacier storage umfassen. Der Nachprüfungsvorgang kann eine Anwendung des Überprüfungsvorgangs auf den Nebenspeicher umfassen. Somit kann die Teilmenge beim Entfernen aus dem Datenvorrat im Nebenspeicher erhalten bleiben, bis beim Nachprüfungsvorgang die Verwerfbarkeit für die Teilmenge im Nebenspeicher festgestellt wird. Somit kann durch den Nebenspeicher ein Archiv gebildet werden, auf welches im Notfall zurückgegriffen werden kann. Gleichzeitig kann durch die Verschiebung der Teilmenge in den Nebenspeicher dennoch die Datenverwaltung im Datenvorrat erleichtert werden. Es kann vorgesehen sein, dass das Kontrollsystem eine gestufte Speicherstruktur mit mehreren Nebenspeichern aufweist, sodass die Teilmenge mit jeder Verwerfbarkeit in eine weitere Stufe der Nebenspeicher verschoben wird.

Gemäß einem weiteren Aspekt der Erfindung ist ein Computerprogrammprodukt vorgesehen. Das Computerprogrammprodukt umfasst Befehle, die bei einer Ausführung durch ein Kontrollsystem das Kontrollsystem veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software als auch mittels einer oder mehrerer spezieller elektronischer Schaltungen, d. h., in Hardware oder in beliebig hybrider Form, d. h., mittels Software-Komponenten und Hardware-Komponenten, realisiert sein.

Gemäß einem weiteren Aspekt der Erfindung ist ein System vorgesehen, das mehrere mobile Vorrichtungen aufweist. Ferner umfasst das System eine Kontrolleinheit zum Ausführen eines erfindungsgemäßen Verfahrens zum Datenmanagement von Betriebsdaten der mobilen Vorrichtungen.

Somit bringt ein erfindungsgemäßes System die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Das Kontrollsystem kann in einen Server integriert sein. Ferner kann das System eine dezentrale Sammelstelle zum Sammeln von Betriebsdaten der Vorrichtungen umfassen, mit welcher der Server verbindbar ist, um die gesammelten Betriebsdaten zu erhalten. Das Kontrollsystem kann eine oder mehrere Recheneinheiten, z. B. eine Recheneinheit der Sammelstelle, eine Recheneinheit des Servers und/oder Recheneinheiten der Vorrichtungen, umfassen. Die Vorrichtungen können für das Sammeln der Daten eine Sensorik und/oder eine Elektronik aufweisen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1: ein erfindungsgemäßes System beim Ausführen eines erfindungsgemäßen Verfahrens, und
- Figur 2: einen Ablauf des Verfahrens.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

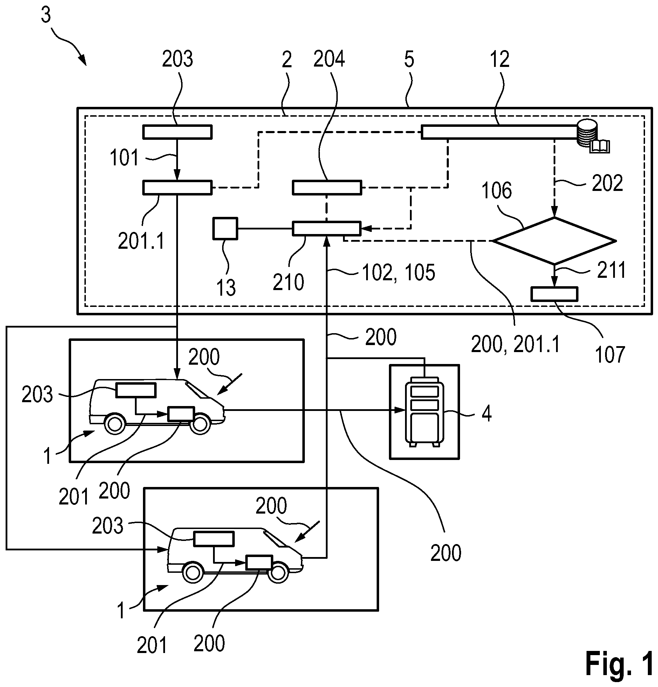

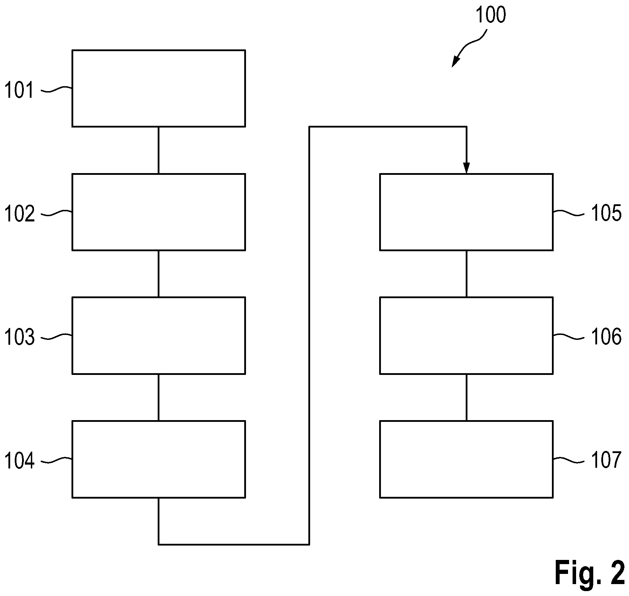

Fig. 1 zeigt ein erfindungsgemäßes System 3 beim Ausführen eines erfindungsgemäßen Verfahrens 100 zum Datenmanagement von Betriebsdaten 200 mehrerer mobiler Vorrichtungen 1 in einem ersten Ausführungsbeispiel. Bei den mobilen Vorrichtungen 1 handelt es sich um Fahrzeuge zum Ausführen einer autonomen Fahrfunktion. Das System 3 umfasst die Vorrichtungen 1 und ein Kontrollsystem 2 zum Ausführen des Verfahrens 100. Das Kontrollsystem 2 ist in eine Cloudstruktur 5, insbesondere einen Server, integriert. Vorzugsweise ist ein Computerprogrammprodukt vorgesehen, das Befehle umfasst, die bei einer Ausführung durch ein Kontrollsystem 2 das Kontrollsystem 2 veranlassen, das Verfahren 100 auszuführen. Wie in Fig. 1 dargestellt, kann das System 3 ferner eine dezentrale Sammelstelle 4 zur gesammelten Übertragung der Betriebsdaten 200 an die Cloudstruktur 5 umfassen. Ein Ablauf des Verfahrens 100 ist in Fig. 2 gezeigt.

Das Verfahren 100 umfasst ein Senden 101 von Steuerungsinstruktionen 203 an die Vorrichtungen 1 zum Bereitstellen der Betriebsdaten 200 mit zumindest einer Metaeigenschaft 201.1. Die Betriebsdaten 200 umfassen Sensordaten in Form von Umgebungsdaten der mobilen Vorrichtungen 1. Die Metaeigenschaft 201.1 ist insbesondere Teil von Metadaten 201 der Betriebsdaten 200, die insbesondere kontextbezogene Informationen über Fahrsituationen der Fahrzeuge umfassen können. Die Metaeigenschaft 201.1 kann beispielsweise einen Zweck der Betriebsdaten 200 umfassen und/oder durch die Steuerungsinstruktionen 203 für die Vorrichtungen 1 vordefiniert werden. Beispielsweise können die Betriebsdaten 200 durch die Vorrichtungen 1 anhand der Metaeigenschaften 201.1 klassifiziert werden.

Insbesondere in Abhängigkeit von den Steuerungsinstruktionen 203 erfolgt ein Erhalt 102 der Betriebsdaten 200 der Vorrichtungen 1 mit Metadaten 201 zu den Betriebsdaten 200. Beispielsweise können die Vorrichtungen 1 nur solche Betriebsdaten 200 an das Kontrollsystem 2 senden, welche anhand der Steuerungsinstruktionen 203 als relevant erkannt werden.

Anhand der Metadaten 201 und vorzugsweise der Steuerungsinstruktionen 203 erfolgt ferner ein Erfassen 103 der Metaeigenschaft 201.1 der Betriebsdaten 200, sodass in Abhängigkeit von der Metaeigenschaft 201.1 ein Erfassen 104 zumindest eines zeitabhängigen Verwerfungskriteriums 202 ausgeführt wird. Das Verwerfungskriterium 202 ist dabei der Metaeigenschaft 201.1 zugeordnet. Beispielsweise kann das Verwerfungskriterium 202 eine Mindestvorhaltezeit zur Definition einer Zeitspanne zur Bereitstellung der Betriebsdaten 200 in einem Datenvorrat 210 umfassen, die durch die Metaeigenschaft 201.1, d. h. beispielsweise durch den Zweck der Erfassung, definiert wird.

Weiterhin erfolgt bei dem Verfahren 100 ein Hinzufügen 105 der erhaltenen Betriebsdaten 200 zu dem Datenvorrat 210. Der Datenvorrat 210 ist dabei in das Kontrollsystem 2 integriert und bildet insbesondere einen Datensee. Um die Datenmenge im Datenvorrat 210 zu minimieren, erfolgt wiederholt ein Durchführen eines Überprüfungsvorgangs 106 zum Erkennen einer Verwerfbarkeit der im Datenvorrat 210 enthaltenen Betriebsdaten 200 in Abhängigkeit von der Metaeigenschaft 201.1 und dem Verwerfungskriterium 202. Vorzugsweise wird beim Überprüfungsvorgang 106 eine nach dem Hinzufügen 105 zum Datenvorrat 210 erfolgte Verwendung 204 der Betriebsdaten 200 im Datenvorrat 210 erkannt und zum Erkennen der Verwerfbarkeit berücksichtigt. Der Überprüfungsvorgang 106 wird insbesondere durch ein wissensbasiertes Verarbeitungssystem 12 ausgeführt, welches ein künstliches, neuronales Netz in Form eines Logic Tensor Networks umfasst. Bei dem Überprüfungsvorgang 106 bilden zumindest eine Teilmenge 211 der Betriebsdaten 200 oder alle Betriebsdaten 200, die Metaeigenschaft 201.1 und das Verwerfungskriterium 202 Eingangsdaten für das Erkennen der Verwerfbarkeit durch das wissensbasierte Verarbeitungssystem 12.

In Abhängigkeit von dem Erkennen der Verwerfbarkeit erfolgt ein Entfernen 107 einer Teilmenge 211 des Datenvorrats 210 aus dem Datenvorrat 210. Vorzugsweise werden zum Entfernen 107 der Teilmenge 211 aus dem Datenvorrat 210 Schlüsseldaten in Abhängigkeit von der Metaeigenschaft 201.1 aus der Teilmenge 211 extrahiert. Die Schlüsseldaten verbleiben dabei beim Entfernen 107 der Teilmenge 211 im Datenvorrat 210. Das Entfernen 107 der Teilmenge 211 kann ein Löschen der Teilmenge 211 umfassen. Es ist jedoch ebenso denkbar, dass ein Nebenspeicher 13 vorgesehen ist, in welchen die Teilmenge 211 des Datenvorrats 210 beim Entfernen 107 aus dem Datenvorrat 210 verschoben wird. Aus dem Nebenspeicher 13 wird die Teilmenge 211 dabei in Abhängigkeit von einem Nachprüfungsvorgang in Abhängigkeit von der Metaeigenschaft 201.1 und einem Nachprüfungskriterium entfernt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, im Rahmen des durch die Patentansprüche definierten Schutzumfangs frei miteinander kombiniert werden, ohne den Rahmen der vorliegenden Erfindung zu verlassen.

### Bezugszeichenliste

- 1: Vorrichtungen
- 2: Kontrollsystem
- 3: System
- 4: Sammelstelle
- 5: Cloudstruktur

- 12: Verarbeitungssystem
- 13: Nebenspeicher

- 100: Verfahren
- 101: Senden von 203
- 102: Erhalt von 200
- 103: Erfassen von 201.1
- 104: Erfassen von 202
- 105: Hinzufügen von 200
- 106: Überprüfungsvorgang
- 107: Entfernen von 211

- 200: Betriebsdaten
- 201: Metadaten
- 201.1: Metaeigenschaft
- 202: Verwerfungskriterium
- 203: Steuerungsinstruktionen
- 204: Verwendung

- 210: Datenvorrat
- 211: Teilmenge

## Patentansprüche

1. Verfahren (100) zum Datenmanagement von Betriebsdaten (200) mehrerer mobiler Vorrichtungen (1),
umfassend:
- Erhalt (102) der Betriebsdaten (200) der Vorrichtungen (1) mit Metadaten (201) zu den Betriebsdaten (200),
- Erfassen (103) von zumindest einer Metaeigenschaft (201.1) der Betriebsdaten (200) anhand der Metadaten (201),
- Erfassen (104) zumindest eines zeitabhängigen Verwerfungskriteriums (202) zur Zuordnung zu der Metaeigenschaft (201.1),
- Hinzufügen (105) der erhaltenen Betriebsdaten (200) zu einem Datenvorrat (210),
- Wiederholtes Durchführen eines Überprüfungsvorgangs (106) zum Erkennen einer Verwerfbarkeit der im Datenvorrat (210) enthaltenen Betriebsdaten (200) in Abhängigkeit von der Metaeigenschaft (201.1) und dem Verwerfungskriterium (202),
- Entfernen (107) einer Teilmenge (211) des Datenvorrats (210) aus dem Datenvorrat (210) in Abhängigkeit von dem Erkennen der Verwerfbarkeit.

2. Verfahren (100) nach Anspruch 1,
**dadurch gekennzeichnet,**
**dass** das Verwerfungskriterium (202) eine Mindestvorhaltezeit zur Definition einer Zeitspanne zur Bereitstellung der Betriebsdaten (200) im Datenvorrat (210) umfasst.

3. Verfahren (100) nach Anspruch 1 oder 2,
**dadurch gekennzeichnet,**
**dass** die Betriebsdaten (200) Sensordaten in Form von Umgebungsdaten der mobilen Vorrichtungen (1) umfassen und/oder es sich bei den mobilen Vorrichtungen (1) um Fahrzeuge zum Ausführen einer autonomen Fahrfunktion handelt.

4. Verfahren (100) nach einem der vorhergehenden Ansprüche,
**dadurch gekennzeichnet,**
**dass** der Überprüfungsvorgang (106) durch ein wissensbasiertes Verarbeitungssystem (12) ausgeführt wird, welches ein künstliches, neuronales Netz in Form eines Logic Tensor Networks umfasst, wobei bei dem Überprüfungsvorgang (106) zumindest die Teilmenge (211) der Betriebsdaten (200), die Metaeigenschaft (201.1) und das Verwerfungskriterium (202) Eingangsdaten für das Erkennen der Verwerfbarkeit durch das wissensbasierte Verarbeitungssystem (12) bilden.

5. Verfahren (100) nach einem der vorhergehenden Ansprüche,
**dadurch gekennzeichnet,**
**dass** beim Überprüfungsvorgang (106) eine nach dem Hinzufügen (105) zum Datenvorrat (210) erfolgte Verwendung (204) der Betriebsdaten (200) im Datenvorrat (210) erkannt und zum Erkennen der Verwerfbarkeit berücksichtigt wird.

6. Verfahren (100) nach einem der vorhergehenden Ansprüche,
**dadurch gekennzeichnet,**
**dass** das Verfahren (100) umfasst:
- Senden (101) von Steuerungsinstruktionen (203) an die Vorrichtungen (1) zum Bereitstellen der Betriebsdaten (200) mit der Metaeigenschaft (201.1),
wobei der Erhalt (102) der gesammelten Betriebsdaten (200) und/oder das Erfassen (103) der Metaeigenschaft (201.1) in Abhängigkeit von den Steuerungsinstruktionen (203) erfolgt.

7. Verfahren (100) nach einem der vorhergehenden Ansprüche,
**dadurch gekennzeichnet,**
**dass** zum Entfernen (107) der Teilmenge (211) aus dem Datenvorrat (210) Schlüsseldaten in Abhängigkeit von der Metaeigenschaft (201.1) aus der Teilmenge (211) extrahiert werden, wobei die Schlüsseldaten beim Entfernen (107) der Teilmenge (211) im Datenvorrat (210) verbleiben.

8. Verfahren (100) nach einem der vorhergehenden Ansprüche,
**dadurch gekennzeichnet,**
**dass** ein Nebenspeicher (13) vorgesehen ist, in welchen die Teilmenge (211) beim Entfernen (107) aus dem Datenvorrat (210) verschoben wird, wobei die Teilmenge (211) aus dem Nebenspeicher (13) in Abhängigkeit von einem Nachprüfungsvorgang in Abhängigkeit von der Metaeigenschaft (201.1) und einem Nachprüfungskriterium entfernt wird.

9. Computerprogrammprodukt, umfassend Befehle, die bei einer Ausführung durch ein Kontrollsystem (2) das Kontrollsystem (2) veranlassen, ein Verfahren (100) nach einem der vorhergehenden Ansprüche auszuführen.

10. System (3) aufweisend
mehrere mobile Vorrichtungen (1) und
ein Kontrollsystem (2) zum Ausführen eines Verfahrens (100) nach einem der Ansprüche 1 bis 8 zum Datenmanagement von Betriebsdaten (200) der mobilen Vorrichtungen (1).
